# FASCICULE DE BREVET EUROPEEN

(11) **EP 2 099 126 B1**
(45) Date de publication et mention de la délivrance du brevet: **04.03.2015**
(21) Numéro de dépôt: 09370006.0
(22) Date de dépôt: 05.03.2009
(51) Int. Cl.: H02P 3/06, H02P 23/00, E06B 9/68

(54) **Moteur à gestion électronique des fins de course**
Motor mit elektronischer Steuerung der Endschalter
Motor with electronic end-of-travel management

(30) Priorité: 06.03.2008 FR 0801231
(43) Date de publication de la demande: 09.09.2009
(73) Titulaire: Deprat Jean SA, 59650 Villeneuve d'Ascq (FR)
(72) Inventeur: Kimpe Florent, 59650 Villeneuve d'Ascq (FR); Couturier, Philippe, 59650 Villeneuve d'Ascq (FR); Couzinet, Laurent, 59650 Villeneuve d'Ascq (FR)
(74) Mandataire: Boubal, Denis Henri Jacques

(56) Documents cités:
- EP-A- 1 160 415
- EP-A- 1 186 741
- FR-A- 2 562 736
- FR-A- 2 874 291
- US-A- 5 414 334

## Description

L'invention concerne un moteur à gestion électronique de fins de course et trouvera une application particulière, mais non limitative, dans le domaine des volets roulants.

Dans le domaine des volets roulants, il est connu des moteurs à gestion électronique des fins de course. On entend ici par moteur à gestion électronique des fins de course, un moteur au sens large, comprenant une partie mécanique avec, d'une part un moteur en soi, notamment le stator et le rotor, voire un réducteur, et d'autre part l'électronique de commande avec une carte électronique et un codeur angulaire, par exemple du type magnétique ou optique, pour la détection du déplacement angulaire du rotor.

Ce type de moteur présente un mode de programmation des fins de course au cours duquel les fins de course peuvent être enregistrées et un mode normal d'actionnement au cours duquel la carte électronique coupe l'alimentation des bobinages du moteur lorsque les fins de course sont approchées, voire atteintes, par l'organe mobile.

Actuellement, trois familles de moteur à gestion électronique des fins de course existent sur le marché, à savoir des moteurs à fins de course automatiques, des moteurs à fin de course réglables et des moteurs dits polyvalents.

Les moteurs à fins de course automatiques permettent un apprentissage automatique des fins de course au cours duquel les fins de course sont repérées par la détection et la reconnaissance automatique des butées physiques, haute et basse. Pour ce faire, la variation d'un paramètre du moteur, tel que par exemple la vitesse du rotor, peut être interprétée par l'électronique de commande comme la présence d'un obstacle.

Les moteurs à fins de course réglables, contrairement aux moteurs à fin de course automatiques, ne permettent pas un apprentissage automatique des fins de course. En revanche, ils sont plus universels et tolérants avec le produit porteur, notamment le volet roulant. Ces moteurs possèdent un domaine d'application plus large et peuvent être utilisés pour tout type de volet roulant. Ils sont ainsi particulièrement sûrs mais sont toutefois pénalisés par l'obligation d'utiliser préalablement un outil d'apprentissage pour la programmation des fins de course. Lors de la programmation, l'utilisateur doit notamment déplacer l'organe mobile jusqu'à la position de fin de course désirée pour permettre l'enregistrement de la position de fin de course.

Enfin, les moteurs, dits polyvalents, sont des moteurs à gestion électronique des fins de course qui peuvent être configurés, soit en mode de fins de course automatiques, soit en mode de fins de course réglables, voire même en un mode mixte, par exemple à butée haute et repérée automatiquement par l'électronique de commande, et l'utilisateur détermine la position de la butée basse manuellement.

Cela étant, quel que soit le type de moteur à gestion électronique de fins de course, une fois basculé en mode normal d'actionnement, l'utilisateur peut commander le volet roulant à la montée ou à la descente, notamment via une commande filaire, et plus particulièrement un interrupteur inverseur.

En mode normal d'actionnement, l'électronique de commande coupe automatiquement l'alimentation des bobinages du moteur lorsque les fins de course sont atteintes, notamment dans le cas d'un moteur à fins de course réglables, ou encore coupe l'alimentation des bobinages du moteur une fraction de rotation avant d'atteindre les fins de course mémorisées, notamment dans le cas d'un moteur à gestion automatique des fins de course afin de ne pas buter trop fortement sur les butées physiques. A cet instant, bien souvent, l'arrêt du moteur n'est pas net, le rotor poursuivant sa rotation sur une fraction de tour ou plus, après la coupure d'alimentation, sous l'effet de l'inertie.

Aujourd'hui, lorsque la commande du moteur est filaire, l'interrupteur inverseur commande non seulement l'actionnement du rotor du moteur, dans un sens ou dans l'autre, mais également ferme ou ouvre l'alimentation du moteur, et notamment l'alimentation de l'électronique de commande. Le moteur, au sens large, comprenant la carte électronique et le codeur angulaire, est donc alimenté uniquement lorsque le moteur est actionné.

Dans le cas d'une coupure d'alimentation simultanée avec l'arrivée sur les fins de course, l'organe mobile peut ainsi poursuivre son déplacement sur une fraction du tour, voire plus, sans que celui-ci ne soit pris en compte par l'électronique de commande. La position réelle de l'organe manoeuvré ne correspond plus à celle observée par l'électronique du moteur. La répétition et l'accumulation de ces petites dérives peuvent ainsi provoquer avec la durée un disfonctionnement de l'organe manoeuvré.

On connaît toutefois du document FR-2.874.291 un dispositif d'actionneur permettant la manoeuvre d'un élément mobile d'occultation. Il comprend une interface utilisateur de commande reliée à une source d'énergie électrique, munie d'au moins deux contacts branchés en parallèle et permettant l'alimentation d'un moteur et une unité électrique de commande. Selon ce document, les contacts de l'interface utilisateur sont des contacts à ouverture permettant l'alimentation permanente de l'unité électronique de commande lorsqu'au moins l'un d'eux est au repos.

On connaît du document EP-1.160.415 un dispositif de commande de systèmes d'occultation motorisés à choix de programmes, dans lequel les fins de course électroniques peuvent être réglées de manière automatique ou réglable.

On connaît du document EP-1.186.741 un dispositif de contrôle d'un moteur alternatif du type moteur tubulaire qui peut être actionné dans un sens ou dans l'autre et qui comprend un premier bobinage connecté à une première ligne d'alimentation et un second bobinage connecté à une deuxième ligne d'alimentation. Deux lignes d'une unité de contrôle permettent de mesurer une différence de phase entre la première et la deuxième lignes d'alimentation lors d'un test bref mené par l'unité de contrôlé permettant, le cas échéant, d'interdire l'actionnement du moteur en butée si ce dernier est en fin de course. Ce test consiste à mesurer la différence de phase lorsqu'une impulsion est générée par un triac.

Aussi, le but de la présente invention est de pallier les inconvénients précités en proposant un moteur à gestion électronique de fins de course assurant la fiabilité des fins de course dans le temps.

Un autre but de l'invention est de proposer un tel moteur dont le câblage d'alimentation et de commande est particulièrement simple, minimisant le nombre de fils à utiliser.

D'autres buts et avantages de la présente invention apparaîtront au cours de la description qui va suivre, qui n'est donnée qu'à titre indicatif et qui n'a pas pour but de la limiter.

L'invention concerne un moteur à gestion électronique des fins de course, à commande filaire, destiné pour un dispositif de fermeture et d'ouverture, avec un organe mobile, tel que notamment un volet roulant, comportant des moyens pour détecter le déplacement du rotor, ainsi qu'un circuit électronique pour l'enregistrement des fins de course et la gestion desdites fins de course lors de l'actionnement dudit moteur, un câblage d'alimentation comportant au moins deux fils d'alimentation, notamment une ligne de phase et une ligne de neutre, connectés au secteur ainsi qu'au moins un interrupteur inverseur pour l'actionnement dans un sens ou dans l'autre du rotor du moteur, ledit moteur présentant au moins un mode de programmation des fins de course et un mode normal d'actionnement au cours duquel le circuit électronique provoque l'arrêt du moteur lorsque les fins de course sont approchées voire atteintes par l'organe mobile, lesdits deux fils d'alimentation, notamment la ligne de phase P et la ligne de neutre N, alimentant en permanence l'électronique de commande du moteur, plus particulièrement le circuit électronique ainsi que lesdits moyens pour détecter le déplacement du rotor, ledit circuit électronique présentant, en outre, des moyens pour prendre en compte en permanence le déplacement du rotor, quelle que soit la position de l'interrupteur inverseur.

Selon l'invention, le circuit électrique présente une seule ligne de commande, les deux fils d'alimentation étant constitués par la phase et le neutre, alimentant directement l'électronique de commande du moteur, l'interrupteur inverseur permettant d'assurer en contact électrique, soit entre la ligne de phase et la ligne de commande, soit entre la ligne de neutre et la ligne de commande, ou encore de n'assurer aucun contact pour maintenir le moteur à l'arrêt, ledit circuit électronique présentant des moyens pour provoquer l'actionnement du rotor dans un premier sens lorsque la phase est détectée sur la ligne de commande et dans un deuxième sens lorsque le neutre est détecté sur la ligne de commande.

Le moteur peut être un moteur à fins de course électroniques, ou encore un moteur à fins de course réglables, ou encore un moteur dit polyvalent.

L'invention sera mieux comprise à la lecture de la description suivante accompagnée des dessins en annexe parmi lesquels :
- la figure 1 est une vue schématique du câblage d'un moteur à gestion électronique des fins de course de l'état de la technique,
- la figure 2 est un schéma électrique du câblage de l'état de la technique tel qu'illustré à la figure 1,
- la figure 3 est un schéma d'un moteur à gestion électronique des fins de course conforme à l'invention, l'interrupteur inverseur étant un interrupteur trois positions,
- la figure 4 est un schéma d'un moteur à gestion électronique des fins de course conforme à l'invention selon un deuxième mode de réalisation, l'interrupteur étant un interrupteur double.

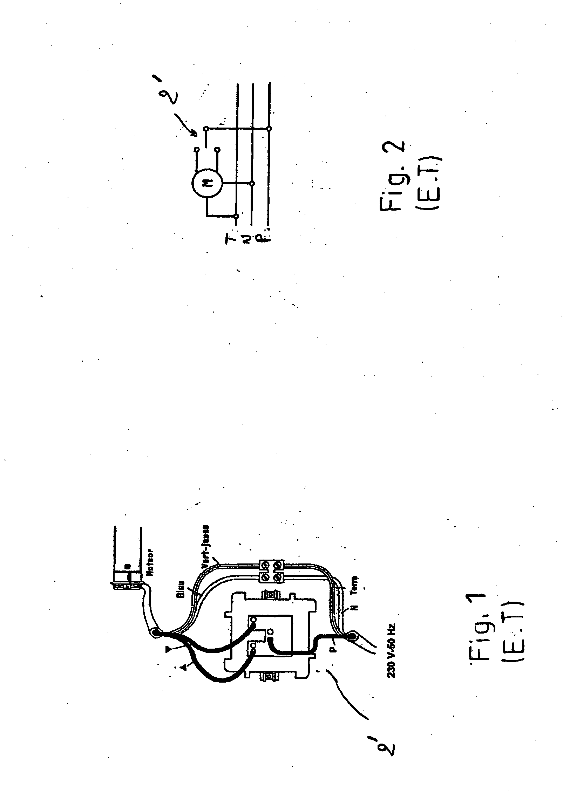

Les figures 1 et 2 illustrent le câblage d'un moteur à gestion électronique des fins de course de l'état de l'art. On remarque que, lorsque l'interrupteur 2' est dans sa position « arrêt », le moteur, y compris l'électronique de commande,ne sont pas alimentés.

L'invention concerne un moteur à gestion électronique des fins de course, à commande filaire. Il est destiné pour un dispositif de fermeture et d'ouverture tel que notamment un volet roulant, avec un organe mobile, tel qu'un tablier de volet roulant.

Le moteur à gestion électronique comporte des moyens pour détecter le déplacement du rotor, constitué par exemple par un codeur angulaire qui permet de suivre le déplacement du rotor du moteur. Le codeur angulaire peut être du type optique, comprenant notamment une roue codée par une alternance de segments réfléchissants ou non et associée à une cellule de détection optique, ou encore du type magnétique, avec un capteur à effet hall associé à une roue codée magnétiquement par une alternance de pôles nord/sud.

Le moteur comprend un circuit électronique pour l'enregistrement des fins de course et la gestion desdites fins de course lors de l'actionnement dudit moteur, comprenant notamment un contrôleur programmé de manière adéquate.

Un câblage d'alimentation comporte au moins deux fils d'alimentation, notamment une ligne de phase P et une ligne de neutre N, connectés au secteur ainsi qu'un organe de commande constitué par un interrupteur inverseur pour l'actionnement dans un sens ou dans l'autre du rotor du moteur.

Le moteur présente au moins un mode de programmation des fins de course et un mode normal d'actionnement au cours duquel le circuit électronique provoque l'arrêt du rotor lorsque les fins de course sont approchées, voire atteintes par l'organe mobile.

Selon l'invention, les deux fils d'alimentation, notamment la ligne de phase P et la ligne de neutre N, alimentent directement et en permanence l'électronique du moteur, quelle que soit la position de l'interrupteur inverseur notamment, le circuit électronique présentant des moyens pour prendre en compte en permanence le déplacement du rotor, quelle que soit la position dudit interrupteur inverseur.

Par exemple, un registre de position de l'électronique de commande permet de suivre en permanence le déplacement de l'organe mobile via un codeur angulaire notamment. Dans le cas d'un glissement de l'organe moteur (moteur non actionné), le registre de position s'incrémente et/ou se décrémente selon le déplacement. Lors du prochain actionnement, aucune dérive des fins de course n'est constatée.

Selon l'invention, le circuit électronique de commande présente une ligne de commande C, unique, ledit interrupteur inverseur 2 permettant d'assurer un contact électrique, entre l'un ou l'autre des fils d'alimentation et la ligne de commande C ou encore de n'assurer aucun contact pour maintenir ledit moteur à l'arrêt. Le circuit électronique présente des moyens pour détecter l'un ou l'autre des fils d'alimentation sur la ligne de commande ainsi que des moyens pour provoquer l'actionnement du rotor dans un premier sens lorsque l'un des fils d'alimentation est détecté sur la ligne de commande et dans un deuxième sens lorsque l'autre des fils d'alimentation est détecté sur ladite ligne de commande C.

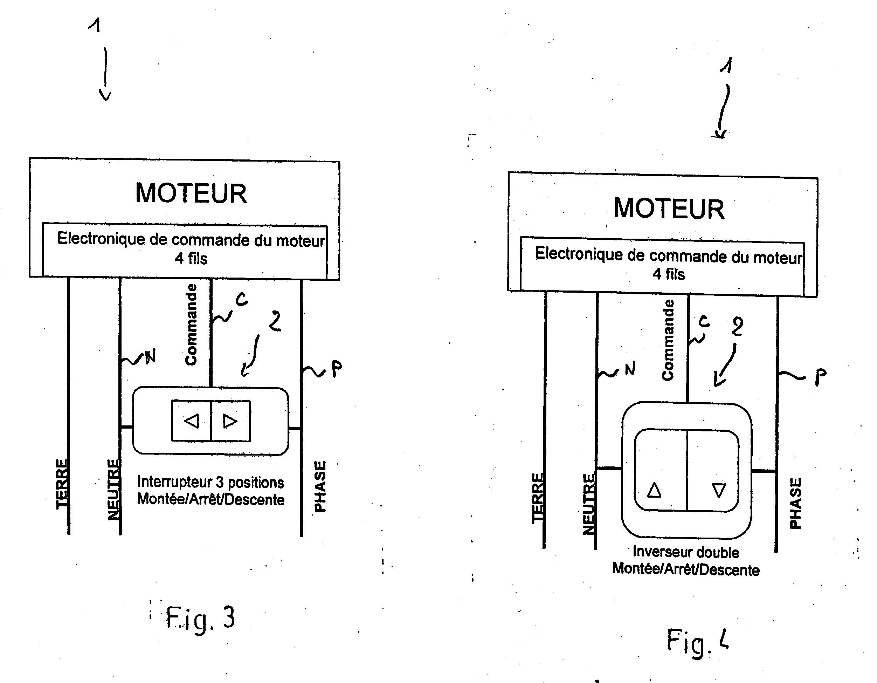

Avantageusement, le câblage permet une alimentation continue de l'électronique de commande peut être du type de celui illustré selon deux modes de réalisation à la figure 3 ou 4. Ces deux modes de réalisation se distinguent par la forme de l'interrupteur qui est un interrupteur à trois positions à la figure 3 et un interrupteur double à la figure 4.

Selon ces deux exemples, le circuit électronique présente une ligne de commande C unique, ledit interrupteur inverseur 2 permettant d'assurer un contact électrique, soit entre la ligne de phase P et la ligne de commande, soit entre la ligne de neutre N et la ligne de commande, ou encore de n'assurer aucun contact pour maintenir ledit moteur à l'arrêt.

Le circuit électronique présente alors des moyens pour détecter la phase ou le neutre sur la ligne de commande ainsi que des moyens pour provoquer l'actionnement du rotor dans un premier sens, lorsque la phase est détectée sur la ligne de commande et dans un deuxième sens lorsque le neutre est détecté sur la ligne de commande.

Les moyens pour détecter l'un ou l'autre des fils d'alimentation, notamment la phase et le neutre, peuvent différencier les deux fils entre eux par l'observation des caractéristiques des signaux électriques des fils, et plus particulièrement les différences entre les signaux (chute de tension, déphasage).

Selon un mode de réalisation, les moyens pour détecter l'un ou l'autre des fils d'alimentation (e.g. la phase ou le neutre) sont constitués par un pont diviseur.

Par exemple, lorsque la phase est détectée sur la ligne de commande, le circuit électronique commande un relais qui actionne à son tour un contacteur pour l'actionnement du moteur dans un premier sens.

Lorsque le neutre est détecté sur la ligne de commande, le circuit électronique commande un autre relais qui actionne à son tour un autre contacteur pour l'actionnement du moteur dans l'autre sens. Lorsque ni la phase, ni le neutre ne sont détectés sur la ligne de commande, le moteur reste à l'arrêt.

On remarquera que ce câblage du moteur est particulièrement simple nécessitant quatre fils (phase, neutre, fils de commande et terre), voire trois lorsque la terre n'est pas obligatoire.

Le moteur peut être du type moteur à fins de course automatiques, ou encore un moteur à fins de course réglables, ou encore un moteur dit polyvalent.

Naturellement, d'autres modes de mise en oeuvre auraient pu être envisagés par l'homme du métier sans pour autant sortir du cadre de l'invention définie par les revendications ci-après.

## Revendications

1. Moteur à gestion électronique des fins de course à commande filaire, destiné pour un dispositif de fermeture et d'ouverture, avec un organe mobile, tel que notamment un volet roulant, comportant des moyens pour détecter le déplacement du rotor, ainsi qu'un circuit électronique pour l'enregistrement des fins de course et la gestion desdites fins de course lors de l'actionnement dudit moteur, un câblage d'alimentation comportant au moins deux fils d'alimentation connectés au secteur ainsi qu'au moins un interrupteur inverseur (2) pour l'actionnement dans un sens ou dans l'autre du rotor du moteur, ledit moteur présentant au moins un mode de programmation des fins de course et un mode normal d'actionnement au cours duquel le circuit électronique provoque l'arrêt du rotor lorsque les fins de course sont approchées voire atteintes par l'organe mobile, lesdits au moins deux fils d'alimentation alimentant en permanence l'électronique de commande dudit moteur, plus particulièrement ledit circuit électronique ainsi que lesdits moyens pour détecter le déplacement du rotor, ledit circuit électronique présentant des moyens pour prendre en compte en permanence le déplacement du rotor, quelle que soit la position de l'interrupteur inverseur (2), **caractérisé en ce que** le circuit électrique présente une seule ligne de commande, les deux fils d'alimentation étant constitués par la phase (P) et le neutre (N) alimentant directement l'électronique de commande du moteur, ledit interrupteur inverseur (2) permettant d'assurer un contact électrique, soit entre la ligne de phase (P) et la ligne de commande (C), soit entre la ligne de neutre (N) et la ligne de commande (C), ou encore de n'assurer aucun contact pour maintenir le moteur à l'arrêt, ledit circuit électronique présentant des moyens pour provoquer l'actionnement du rotor dans un premier sens lorsque la phase est détectée sur la ligne de commande et dans un deuxième sens lorsque le neutre est détecté sur ladite ligne de commande.

2. Moteur selon la revendication 1, dans lequel le moteur est un moteur à fins de course électroniques, ou encore un moteur à fins de course réglables, ou encore un moteur dit polyvalent.

3. Moteur selon la revendication 1 ou 2 dans lequel les moyens pour détecter l'un ou l'autre des deux fils d'alimentation, à savoir le neutre ou la phase, sont constitués par un pont diviseur.

## Patentansprüche

1. Motor mit elektronischer Regelung der Endlagen mit Steuerung über Kabelverbindung, welcher für eine Vorrichtung zum Schließen und zum Öffnen mit einem beweglichen Element, wie insbesondere einem Rollladen, bestimmt ist, welcher Mittel zum Erfassen der Bewegung des Rotors sowie eine elektronische Schaltung zur Registrierung der Endlagen und die Regelung dieser Endlagen während der Betätigung des Motors aufweist, und eine Versorgungsverkabelung, die mindestens zwei an das Stromnetz angeschlossene Versorgungsdrähte sowie mindestens einen Wechselschalter (2) zur Betätigung des Rotors des Motors in der einen oder anderen Richtung aufweist, wobei der Motor mindestens eine Betriebsart zur Programmierung der Endlagen und eine normale Betriebsart der Betätigung, während der die elektronische Schaltung das Anhalten des Rotors hervorruft, wenn sich das bewegliche Element den Endlagen nähert oder diese sogar erreicht, aufweist, wobei die mindestens zwei Versorgungsdrähte ständig die Steuerelektronik des Motors speisen, insbesondere die elektronische Schaltung sowie die Mittel zum Erfassen der Bewegung des Rotors, wobei die elektronische Schaltung Mittel zur ständigen Berücksichtigung der Bewegung des Rotors unabhängig von der Position des Wechselschalters (2) aufweist, **dadurch gekennzeichnet, dass** die elektrische Schaltung eine einzige Steuerleitung aufweist, wobei die zwei Versorgungsdrähte aus der Phase (P) und dem Neutralleiter (N) bestehen, welche die Steuerelektronik des Motors direkt speisen, wobei der Wechselschalter (2) ermöglicht, einen elektrischen Kontakt entweder zwischen der Phasenleitung (P) und der Steuerleitung (C) oder zwischen dem Neutralleiter (N) und der Steuerleitung (C) zu gewährleisten, oder auch gar keinen Kontakt zu gewährleisten, um den Motor ausgeschaltet zu halten, wobei die elektronische Schaltung Mittel zum Hervorrufen der Betätigung des Rotors in einer ersten Richtung, wenn die Phase auf der Steuerleitung erkannt wird, und in einer zweiten Richtung, wenn der Neutralleiter auf dieser Steuerleitung erkannt wird, aufweist.

2. Motor nach Anspruch 1, wobei der Motor ein Motor mit elektronischen Endlagen oder auch ein Motor mit verstellbaren Endlagen oder auch ein sogenannter polyvalenter Motor ist.

3. Motor nach Anspruch 1 oder 2, wobei die Mittel zum Erkennen des einen oder des anderen der zwei Versorgungsdrähte, nämlich des Neutralleiters oder der Phase, aus einer Teilerbrücke bestehen.

## Claims

1. Motor with electronic end-of-travel management with wired control, intended for a device for closing and opening, with a mobile member, such that, in particular a rolling shutter, comprising means for detecting the displacement of the rotor, as well as an electronic circuit for the recording of end-of-travel and the management of said end-of-travel during the actuating of said motor, with a power cable comprising at least two power supply leads connected to the mains as well as at least one inverter switch (2) for the actuating in one direction or in the other of the rotor of the motor, said motor having at least one mode for programming the end-of-travel and a normal actuating mode during which the electronic circuit causes the stoppage of the rotor when the end-of-travel are close to or even reached by the mobile member, with said at least two power supply leads constantly powering the control electronics of said motor, more particularly said electronic circuit as well as said means for detecting the displacement of the rotor, with said electronic circuit having means for constantly taking the displacement of the rotor into account, regardless of the position of the inverter switch (2), **characterised in that** the electronic circuit has a single control line, with the two power supply leads being constituted by the phase (P) and the neutral (N) directly supplying the control electronics of the motor, said inverter switch (2) making it possible to provide an electrical contact, either between the phase line (P) and the control line (C), or between the neutral line (N) and the control line (C), or to not provide any contact in order to maintain the motor stopped, with said electronic circuit having means for provoking the actuating of the rotor in a first direction when the phase is detected on the control line and in a second direction when the neutral is detected on said control line.

2. Motor according to claim 1, wherein the motor is a motor with electronic end-of-travel, or again a motor with adjustable end-of-travel, or again a so-called versatile motor.

3. Motor according to claim 1 or 2 wherein the means for detecting one or the other of the two power supply leads, namely the neutral or the phase, are constituted by a divider bridge.
